(19)

Europäisches
Patentamt
European
Patent Office
Office européen
des brevets

(11) **EP 2 852 160 A1**

(12) **EUROPEAN PATENT APPLICATION**

(43) Date of publication:
**25.03.2015 Bulletin 2015/13**

(51) Int Cl.:
***H04N 9/31*** (2006.01)

(21) Application number: **14183834.2**

(22) Date of filing: **05.09.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.09.2013 JP 2013193309**

(71) Applicant: **Funai Electric Company Ltd
Daito-shi
Osaka 574-0013 (JP)**

(72) Inventor: **Kawashiki, Mitsumasa
Osaka, 5740013 (JP)**

(74) Representative: **Vigand, Philippe et al
Novagraaf International SA
3 chemin de l'Echo
1213 Onex Geneva (CH)**

(54) **Projector and method for compensating for amount of laser light**

(57)     Provided is a projector including: a control unit 107 which controls amounts of laser light output by a plurality of light source units 101R, 101G, and 101B, based on color pixel values of each of plural pixels of an image which is projected onto a projection surface 108, the color pixel values corresponding to different colors of wavelengths of the laser light output by the plurality of light source units 101R, 101G, and 101B, wherein the control unit 107 further compensates for the amounts of the laser light, based on a portion of the amounts of the laser light detected by an OEIC 104, so that for each of the different colors, proportion of the amount of the laser light of the color output by one of the light source units 101R, 101G, and 101 to the color pixel value of the color in each of the plural pixels of the image corresponds to predetermined proportion.

FIG. 1

EP 2 852 160 A1

## Description

### Field

The present invention relates to projectors, and, more particularly, to a projector which scans laser light onto a projection surface to project an image onto the projection surface.

### Background

Conventionally, projectors are known which scan laser light onto a projection surface, such as a screen or a wall, to project an image onto the projection surface. A projector has laser light sources having wavelengths of primary colors which are red, green, and blue, and emits the laser light having the wavelengths of the colors to project a color image onto a projection surface.

The laser light source is driven by a current and emits laser light that has an amount of light corresponding to the current. However, depending on environmental temperature surrounding the projector, an amount of laser light output from the laser light source varies even if the same magnitude of current is applied.

Thus, laser light control, known as APC (automatic power control) emission control, is performed. In APC emission control, a point, called a calibration point, is provided outside a region where an image is projected onto the projection surface, and laser light is constantly emitted at the calibration point. Thus, a bright point is projected near the projection surface, besides an image projected, and this is unsightly.

On the other hand, it is conceivable to block the laser light directed to the calibration point inside the projector. However, laser light blocking is difficult to achieve because the optical path of the laser light directed to the calibration point and the optical path of laser light for projecting an image are in close proximity. A projector which blocks laser light directed to a calibration point is also proposed (e.g., see PTL 1).

### Citation List

### Patent Literature

[PTL 1] Japanese Unexamined Patent Application Publication No. 2009-141107

### Summary

### Technical Problem

However, in the projector disclosed in PTL 1, a portion of the optical path of the laser light for image projection is encroached due to blocking of the optical path of the laser light directed to the calibration point. This causes a problem that image size is reduced.

The present invention is made to address the above problem and has an object to provide a projector which allows the APC emission control without use of a calibration point and without reducing image size.

### Solution to Problem

To achieve the above object, a projector according to one aspect of the present invention is a projector including: a plurality of light source units configured to output laser light having wavelengths of different colors; a projection unit configured to scan the laser light output by the plurality of light source units over a projection surface to project an image onto the projection surface; a detection unit configured to detect a portion of amounts of the laser light output by the plurality of light source units for projecting the image; and a control unit configured to control the amounts of the laser light output by the plurality of light source units, based on color pixel values of each of pixels of the image, the color pixel values corresponding to the different colors, wherein the control unit is further configured to compensate for the amounts of the laser light, based on the portion of the amounts of the laser light detected by the detection unit, so that for each of the different colors, proportion of the amount of the laser light of the color output by one of the light source units to the color pixel value of the color in each of the pixels of the image which is projected onto the projection surface corresponds to predetermined proportion.

According to the above configuration, a portion of the amount of laser light that is used for image projection is used to compensate for the amount of laser light which are output from the light sources. This obviates the need for a calibration point in compensating for the amount of laser light. Thus, the APC emission control can be provided without use of a calibration point and without reducing image size.

Specifically, the control unit may include: a coefficient calculation unit configured to, using a first coefficient, calculate a second coefficient for each of the different colors, from the color pixel value of the color in each of the pixels of the image which is projected onto the projection surface and a portion of the amount of the laser light of the color detected by the detection unit when the laser light of the color is projected onto the pixel, the first coefficient indicating predetermined proportion of the amount of laser light of the color output by one of the light source units to the portion of the amount of laser light of the color which is output by the light source unit and detected by the detection unit, the second coefficient indicating proportion, to the color pixel value of the color, of the amount of the laser light of the color output by the light source unit based on the color pixel value; and a compensation unit configured to compensate for the amounts of the laser light output from the plurality of light source units so that the second coefficient calculated by the coefficient calculation unit for each of the different colors corresponds to a third coefficient indicating predetermined proportion of the amount of the laser light of the color output by one of the light source units to the color pixel value of the color.

Moreover, the coefficient calculation unit may randomly select the pixels in the image.

According to the above configuration, the pixels can be selected in a simple manner.

Moreover, the coefficient calculation unit may select, for each of the different colors, a pixel which has a maximum color pixel value of the color, as one of the pixels in the image.

According to the above configuration, a pixel that yields a largest amount of laser light can be selected for each color. Thus, the pixel is less susceptible to noise, as compared with selection of a pixel that yields a small amount of laser light, and therefore the second coefficients can be accurately obtained.

Moreover, the coefficient calculation unit may select, as the pixels in the image, a pixel that has a largest sum of the color pixel values of the different colors, and, from among pixels each having the color pixel values of 0 or greater, a pixel that has a smallest sum of the color pixel values and a pixel that has a medium sum of the color pixel values.

According to the above configuration, pixels that yield various amounts of light can be selected. Thus, the second coefficients can be accurately obtained, as compared with use of pixels that yield a similar amount of laser light.

Moreover, the coefficient calculation unit may calculate the second coefficient, when the color pixel values of each of the pixels are greater than 0.

If an amount of laser light of any color is 0, the simultaneous equations using the first coefficients and the second coefficients cannot be solved. However, according to the above configuration, such a case is excluded, thereby accurately obtaining the second coefficients.

Moreover, the projection unit may include: a mixer unit configured to mix the laser light output from the plurality of light source units to output mixed light; a beam splitter which divides the mixed light into two beams; and a mirror which causes one of the two beams obtained by the beam splitter to be scanned onto the projection surface, and the detection unit may detect an amount of light of the other of the two beams obtained by the beam splitter as the portion of the amounts of the laser light output by the plurality of light source units.

According to the above configuration, the portion of the amount of laser light can be directed to the detection unit in a simple configuration.

It should be noted that the present invention can be implemented not only as a projector that includes such characteristic processing units but also as a method for compensating for an amount of laser light, which includes, as steps, processes which are performed by the characteristic processing units included in the projector. The present invention can also be implemented as a program for causing a computer to function as the characteristic processing units included in the projector, or a program for causing a computer to execute the characteristic steps included in the method for compensating for an amount of laser light. In addition, such a program can, of course, be distributed in a non-transitory computer-readable storage medium such as a compact disc read only memory (CD-ROM) and via a communication network such as the Internet.

Advantageous Effects

According to the present invention, APC emission control without use of a calibration point and without reducing image size can be provided.

**Brief Description of Drawings**

[FIG. 1]

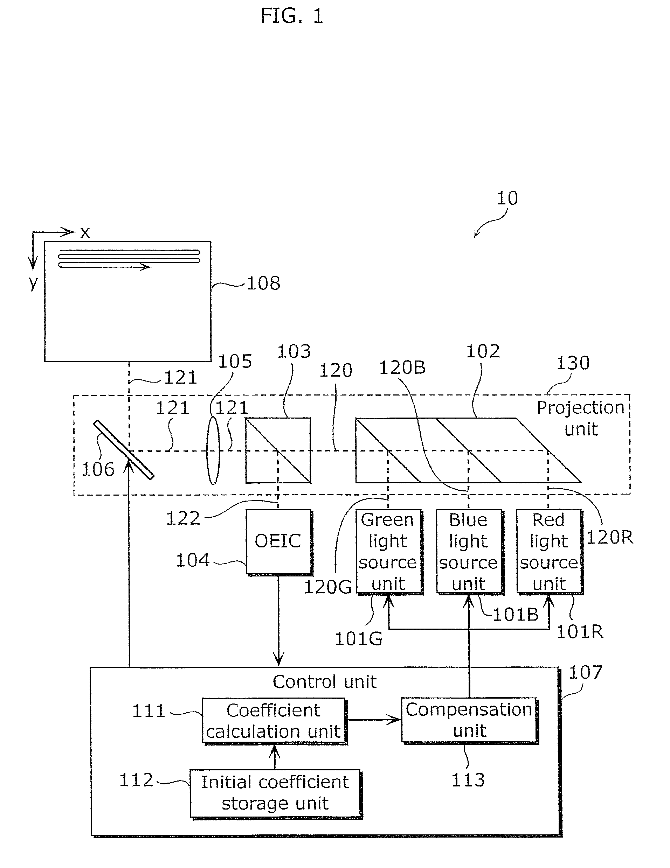

FIG. 1 is a block diagram of a hardware configuration of a projector according to an embodiment 1.
[FIG. 2]

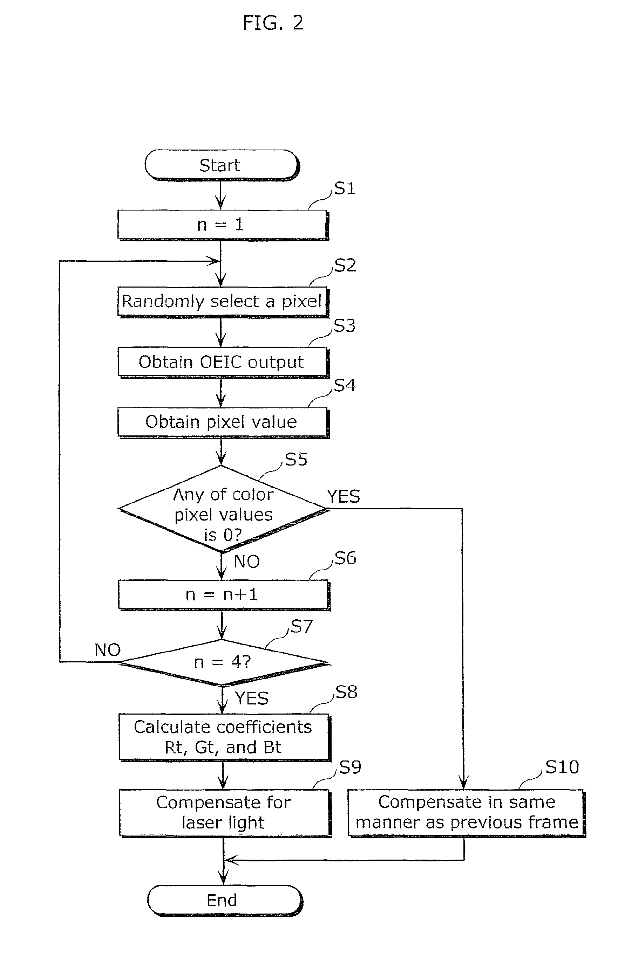

FIG. 2 is a flowchart illustrating a process of compensating for an amount of laser light by the projector according to the embodiment 1.

[FIG. 3]

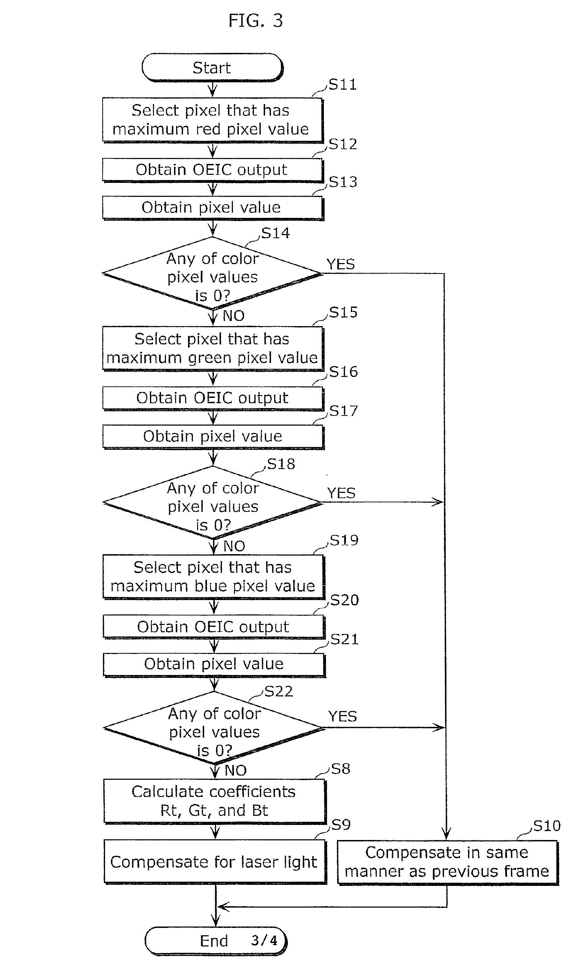

FIG. 3 is a flowchart illustrating a process of compensating for an amount of laser light by a projector according to an embodiment 2.

[FIG. 4]

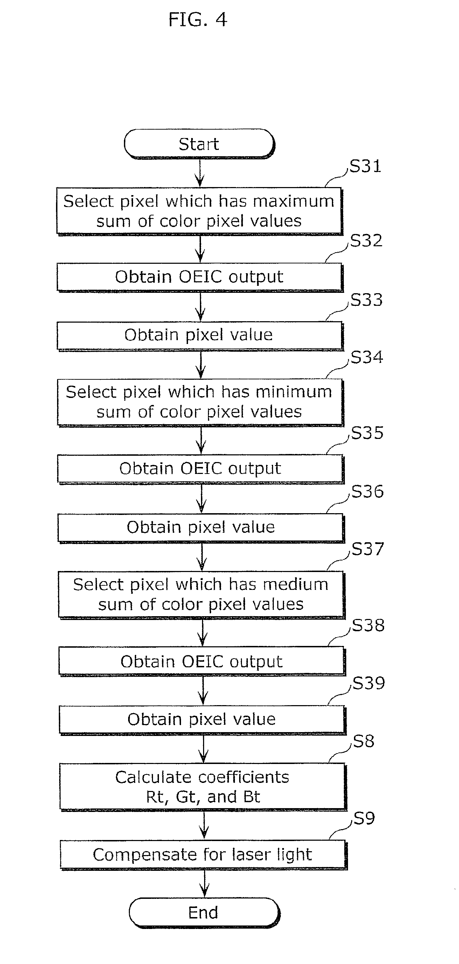

FIG. 4 is a flowchart illustrating a process of compensating for an amount of laser light by a projector according to an embodiment 3.

Description of Embodiments

Hereinafter, embodiments according to the present invention will be described, with reference to the accompanying drawings. It should be noted that the embodiments described below are each merely a preferred illustration of the present invention. Values, shapes, materials, components, arrangement or connection between the components, steps, and the order of the steps are merely illustrative, and are not intended to limit the present invention. The present invention is indicated by the appended claims. Thus, among components of the embodiments below, components not set forth in the independent claims are not necessary to achieve the present invention but will be described as components for preferable embodiments.

**Embodiment 1**

<1. Configuration>

FIG. 1 is a block diagram of a hardware configuration of a projector according to an embodiment 1.

A projector 10 scans laser light 121 over a projection surface 108 to project an image onto the projection surface 108. The projector 10 includes a red light source unit 101R, a green light source unit 101G, a blue light source unit 101B, a projection unit 130, an optical electrical integrated circuit (OEIC) 104, and a control unit 107.

The red light source unit 101R is a laser diode which outputs laser light 120R having a red wavelength.

The green light source unit 101G is a laser diode which outputs laser light 120G having a green wavelength.

The blue light source unit 101B is a laser diode which outputs laser light 120B having a blue wavelength.

The projection unit 130 scans, over the projection surface 108, three laser light beams 120R, 120G, and 120B which are respectively output from the red light source unit 101R, the green light source unit 101G, and the blue light source unit 101B to project an image onto the projection surface 108. The projection unit 130 includes a mixer unit 102, a beam splitter 103, a lens 105, and a mirror 106.

The mixer unit 102 mixes the three laser light beams 120R, 120G, and 120B which are respectively output from the red light source unit 101R, the green light source unit 101G, and the blue light source unit 101B, and outputs laser light 120. The mixer unit 102 is configured with a dichroic prism, for example.

The beam splitter 103 is, for example, configured with a half mirror, and divides the laser light 120 into the laser light 121 and laser light 122.

The lens 105 condenses the laser light 121 that has passed through the beam splitter 103.

The mirror 106 is, for example, a MEMS (micro electro mechanical systems) mirror, and oscillated in the horizontal direction (x direction) and the vertical direction (y direction) to reflect the laser light 121 which has passed through the lens 105. The mirror 106 causes the laser light 121 to be scanned over the projection surface 108 to project an image onto the projection surface 108.

The OEIC 104 (included in a detection unit) detects an amount of the laser light 122 output from the beam splitter 103.

The control unit 107 supplies drive currents to the red light source unit 101R, the green light source unit 101G, and the blue light source unit 101B, and adjusts an amount of the laser light from each light source unit by adjusting the supplied drive current. The control unit 107 further compensates for the amounts of the laser light, based on the portion of the amounts of the laser light detected by the OEIC 104, so that for each of the different colors, proportion of the amount of the laser light of the color output by one of the light source units to the color pixel value of the color in each of the pixels of the image which is projected onto the projection surface 108 corresponds to predetermined proportion. The control unit 107 controls driving of the mirror 106. The control unit 107 is configured with a computer system which includes a processor and a memory.

The memory functions as an initial coefficient storage unit 112.

The control unit 107 includes a coefficient calculation unit 111 and a compensation unit 113 as functional processing units which are implemented by execution, on a processor, of a program for compensating for the amount of laser light.

The initial coefficient storage unit 112 stores first coefficients and third coefficients. The first coefficient indicates predetermined proportion of the amount of laser light of a color output by one of the light source units to the portion of the amount of laser light of the color which is output by the light source unit and detected by the OEIC 104. The third coefficient indicates predetermined proportion of the amount of the laser light of a color output by one of the light source units to the color pixel value of the color.

The first coefficients and the third coefficients will be described below. The first coefficients and the third coefficients are determined and adjusted in manufacturing the projector 10.

Table 1 illustrates the first coefficients. The first coefficients are obtained by the equations: $\alpha = R0/Ro0$, $\beta = G0/Go0$, and $\gamma = B0/Bo0$, respectively, where Ro0, Go0, and Bo0 indicate amounts of the laser light 122 having red, green, and blue wavelengths, respectively, which are detected by the OEIC 104, R0, G0, and B0 indicate amounts of output of the laser light 120R, 120G, and 120B, respectively, from which the laser light 122 originates, and $\alpha$, $\beta$, and $\gamma$ indicate the first coefficients for red, green, and blue, respectively.

[Table 1]

| Color | Detected amount of light | Amount of output of light | First coefficient |
|---|---|---|---|
| Red | Ro0 | R0 | $\alpha=R0/Ro0$ |
| Green | Go0 | G0 | $\beta=G0/Go0$ |
| Blue | Bo0 | B0 | $\gamma=B0/Bo0$ |

Table 2 illustrates the third coefficients. The third coefficients are obtained by the equations: $Rt0 = R0/r0$, $Gt0 = G0/g0$, $Bt0 = B0/b0$, respectively, where r0, g0, and b0 indicate a red pixel value, a green pixel value, and a blue pixel value, respectively, and Rt0, Gt0, and Bt0 indicate the third coefficients for red, green, and blue, respectively.

[Table 2]

| Color | Pixel value | Amount of output of light | Third coefficient |
|---|---|---|---|
| Red | r0 | R0 | Rt0=R0/r0 |
| Green | g0 | G0 | Gt0=G0/g0 |
| Blue | b0 | B0 | Bt0=B0/b0 |

The coefficient calculation unit 111, using a first coefficient, calculates a second coefficient for each color, from the color pixel value of the color in each of the pixels of the image which is projected onto the projection surface 108 and an amount of the laser light of the color detected by the OEIC 104 when the laser light of the color is projected onto the pixel. The second coefficient indicates proportion, to the color pixel value of the color, of the amount of the laser light of the color output by the light source unit based on the color pixel value. A method of calculating the second coefficient will be described below.

The compensation unit 113 compensates for amounts of the laser light output from the plurality of light source units so that the second coefficient calculated by the coefficient calculation unit 111 for each color corresponds to the third coefficient for the color.

<2. Processing>

Next, a process, by the projector 10, of compensating for the amounts of laser light from the red light source unit 101R, the green light source unit 101G, and the blue light source unit 101B will be described. The process of compensating for the amounts of laser light is performed each time one image is projected onto the projection surface 108, namely, frame by frame.

FIG. 2 is a flowchart illustrating the process, by the projector 10 according to the embodiment 1, of compensating for an amount of laser light.

The coefficient calculation unit 111 sets a counter n to 1 (S1). The counter n is a variable stored in the memory.

The coefficient calculation unit 111 randomly selects one pixel in the image which is projected onto the projection surface 108 (S2).

The coefficient calculation unit 111 obtains, from the OEIC 104, an amount of the laser light 122 that is detected by the OEIC 104 when the laser light 121 is projected onto the selected pixel (S3).

The coefficient calculation unit 111 obtains color pixel values of the selected pixel (S4). Color pixel values of pixels are previously stored in the memory. The pixels each include color pixel values each represented by, for example, an 8-bit value in a range from 0 to 255, indicating a red pixel value, a green pixel value, or a blue pixel value.

The coefficient calculation unit 111 determines whether any of the color pixel values is 0 (S5).

If none of the color pixel values is 0 (NO in S5), the coefficient calculation unit 111 increments the counter n by 1 (S6).

The coefficient calculation unit 111 determines whether the counter n is 4 (S7).

If the counter n is less than 4 (NO in S7), the processing returns to S2. If the counter n is 4 (YES in S7), this indicates that the amounts of the laser light 122 and pixel values for three pixels in the image have been obtained through the foregoing processing.

The coefficient calculation unit 111 uses the obtained amounts of the laser light 122 and pixel values to calculate the second coefficients (S8). Details of the method of calculating the second coefficient will be descried below.

The following simultaneous equations (Eq. 1) stand:

[Math. 1]

$$\begin{cases} A1 = \dfrac{1}{\alpha} \times r1 \times Rt + \dfrac{1}{\beta} \times g1 \times Gt + \dfrac{1}{\gamma} \times b1 \times Bt \\[2mm] A2 = \dfrac{1}{\alpha} \times r2 \times Rt + \dfrac{1}{\beta} \times g2 \times Gt + \dfrac{1}{\gamma} \times b2 \times Bt \qquad \cdots \ (\text{Eq. 1}) \\[2mm] A3 = \dfrac{1}{\alpha} \times r3 \times Rt + \dfrac{1}{\beta} \times g3 \times Gt + \dfrac{1}{\gamma} \times b3 \times Bt \end{cases}$$

where An (n = 1, 2, 3) indicates the amounts of the laser light 122 obtained in S3, rn, gn, and bn (n = 1, 2, 3) indicate a red pixel value, a green pixel value, and a blue pixel value, respectively, obtained in S4, and Rt, Gt, and Bt indicate the second coefficients for red, green, and blue, respectively.

The coefficient calculation unit 111 solves the simultaneous equations indicated in Eq. 1 to calculate the second coefficients Rt, Gt, and Bt.

The compensation unit 113 compares the second coefficients calculated by the coefficient calculation unit 111 and the corresponding third coefficients to compensate for the drive currents to be supplied to the red light source unit 101R, the green light source unit 101G, and the blue light source unit 101B so that values of the second coefficients correspond to values of the corresponding third coefficients, thereby compensating for the amount of laser light to be output from each light source unit (S9). It should be noted that the image projection onto the projection surface 108 may be ended at the end of the second coefficient calculation process (S8). Thus, the compensation process (S9) may be performed on a frame that follows the frame undergone the second coefficient calculation process (S8).

If any of the color pixel values obtained in the process of S4 is 0 (YES in S5), the compensation unit 113 compensates for the same amount of laser light for the frame as with the previous frame (S10).

<3. Effect>

As described above, according to the embodiment 1, using an amount of a portion of the laser light used for image projection, the compensation unit 113 compensates for the amount of laser light. This compensates for the amount of laser light, without a calibration point. Thus, APC emission control can be provided without use of a calibration point and without reducing the image size.

The three pixels are randomly selected from the image, allowing the pixel selection in a simple manner.

If an amount of laser light of any color is 0, the simultaneous equations indicated in Eq. 1 cannot be solved. In the above process, however, such a case is excluded, thereby accurately obtaining the second coefficients.

**Embodiment 2**

Next, a projector according to an embodiment 2 will be described. The embodiment 2 is different from the embodiment 1 in method of selecting a pixel in an image.

The projector according to the embodiment 2 has the same configuration as the projector 10 according to the embodiment 1 as shown in FIG. 1. Thus, the detailed description will not be repeated herein.

FIG. 3 is a flowchart illustrating a process of compensating for an amount of laser light by the projector 10 according to the embodiment 2.

The coefficient calculation unit 111 selects one pixel that has a maximum red pixel value in the image which is projected onto the projection surface 108 (S11).

The coefficient calculation unit 111, as with the processes of S3 and S4 in FIG. 2, obtains an amount of the laser light 122 detected by the OEIC 104 for the selected pixel (S12), and obtains a pixel value of the selected pixel (S13).

The coefficient calculation unit 111 determines whether any of the color pixel values of the pixel is 0 (S14)

If none of the color pixel values is 0 (NO in S14), the same processes as the processes of S11 to S14 are repeated for the cases of a maximum green pixel value and a maximum blue pixel value (S15 to S22). The amounts of the laser light 122 and the pixel values are obtained through the foregoing processing, with respect to a pixel having a maximum red pixel value, a pixel having a maximum green pixel value, and a pixel having a maximum blue pixel value.

The coefficient calculation unit 111 uses the obtained amounts of the laser light 122 and pixel values to calculate the second coefficients (S8), and the compensation unit 113 compensates for the amount of laser light output from the light source unit of each color (S9). The processes of S8 and S9 are as described in the embodiment 1. Thus, the detailed description will not be repeated herein.

If any of the color pixel values obtained in the process of S13, S17, and S21 is 0 (YES in S14, YES in S18, or YES in S22), the compensation unit 113 compensates for the same amount of laser light for the frame as with the previous frame (S10).

As described above, according to the embodiment 2, a pixel that yields a largest amount of laser light can be selected for each color. Thus, the pixel is less susceptible to noise, as compared with selection of a pixel that yields a small amount of laser light, and therefore the second coefficients can be accurately obtained.

**Embodiment 3**

Next, a projector according to an embodiment 3 will be described. The embodiment 3 is different from the embodiment 1 in method of selecting a pixel in an image.

The projector according to the embodiment 3 has the same configuration as the projector 10 according to the embodiment 1 as shown in FIG. 1. Thus, the detailed description will not be repeated herein.

FIG. 4 is a flowchart illustrating a process of compensating for an amount of laser light by a projector 10 according to the embodiment 3.

In the image which is projected onto the projection surface 108, the coefficient calculation unit 111 selects pixels which has a maximum sum of red, green, and blue pixel values from among pixels in which none of red, green, and blue pixel values is 0 (S31).

The coefficient calculation unit 111, as with the processes of S3 and S4 in FIG. 2, obtains an amount of the laser light 122 detected by the OEIC 104 for the selected pixel (S32), and obtains a pixel value of the selected pixel (S33).

Next, in the image which is projected onto the projection surface 108, the coefficient calculation unit 111 selects a pixel which has a minimum sum of red, green, and blue pixel values from among pixels in which none of red, green, and blue pixel values is 0 (S34).

The coefficient calculation unit 111, as with the processes of S3 and S4 in FIG. 2, obtains an amount of the laser light 122 detected by the OEIC 104 for the selected pixel (S35), and obtains a pixel value of the selected pixel (S36).

Next, in the image which is projected onto the projection surface 108, the coefficient calculation unit 111 selects a pixel which has a medium sum of red, green, and blue pixel values from among the pixels in which none of red, green, and blue pixel values is 0 (S37).

The coefficient calculation unit 111, as with the processes of S3 and S4 in FIG. 2, obtains an amount of the laser light 122 detected by the OEIC 104 for the selected pixel (S38), and obtains a pixel value of the selected pixel (S39).

The amounts of the laser light 122 and the pixel values are obtained through the foregoing processing, with respect to a pixel which has a maximum sum of red, green, and blue pixel values, a pixel which has a minimum sum of red, green, and blue pixel values, and a pixel which has a medium sum of red, green, and blue pixel values.

The coefficient calculation unit 111 uses the obtained amounts of the laser light 122 and pixel values to calculate the second coefficients (S8), and the compensation unit 113 compensates for the amount of laser light to be output from the light source unit of each color (S9). The processes of S8 and S9 are as described in the embodiment 1. Thus, the detailed description will not be repeated herein.

As described above, according to the embodiment 3, pixels that yield various amounts of light can be selected. Thus, the second coefficients can be accurately obtained, as compared with use of pixels that yield a similar amount of laser light.

The projector according to the embodiments of the present invention has been described above. The present invention, however, is not limited to the embodiments described above.

For example, in the above-described embodiment, three pixels are selected in an image to calculate the second coefficients. However, the number of pixels selected in the image is not limited to three. For example, four or more pixels may be selected and four or more equations similar to those indicated in Eq. 1 may be produced based on values obtained from the pixels to calculate the second coefficients from the equations by least squares.

Moreover, the control unit 107 described above may be configured in, specifically, a computer system which includes a microprocessor, a read only memory (ROM), a random access memory (RAM), a hard disk drive, a display unit, a keyboard, a mouse, and so on. A computer program is stored in the RAM or the hard disk drive. The function of the control unit 107 is performed by the microprocessor operating according to the computer program. Here, the computer program includes a combination of a plurality of instruction codes for giving instructions to the computer to perform predetermined functions.

Furthermore, some or the whole of the components included in the control unit 107 described above may be configured with one system large scale integration (LSI). The system LSI is a super multi-function LSI fabricated by integrating a plurality of components on one chip, and is, specifically, a computer system which includes a microprocessor, a ROM, a RAM, and so on. A computer program is stored in the RAM. The system LSI performs its functionality by the microprocessor operating according to the computer program.

Furthermore, some or the whole of the components included in the control unit 107 described above may be configured with an IC card or a single module detachable to the projector 10. The IC card or the module is a computer system which includes a microprocessor, a ROM, a RAM, and so on. The IC card or the module may include the super multi-function LSI described above. The IC card or the module performs its functionality by the microprocessor operating according to the computer program. The IC card or the module may be of tamper-resistant.

Moreover, the present invention may be implemented in the above-described method for compensating for an amount of laser light. Moreover, the present invention may be achieved in a computer program implementing such a method via a computer, or may be implemented in a digital signal that comprises the computer program.

Furthermore, the present invention may be achieved in a non-transitory computer-readable recording medium having stored therein the computer program or the digital signal, such as a flexible disk, a hard disk, CD-ROM, MO, DVD, DVD-ROM, DVD-RAM, BD (Blu-ray (registered trademark) Disc), and a semiconductor memory. Moreover, the present invention may be implemented in the digital signal stored in such a non-transitory recording medium.

Moreover, the present invention may be achieved in transmitting the computer program or the digital signal via an electric communication line, a wireless or wired communication line, a network represented by the Internet, data broadcast, or the like.

Moreover, the present invention may be achieved in a computer system which includes a microprocessor and a memory. The memory may store the computer program and the microprocessor may operate according to the computer program.

Moreover, by transferring the program or the digital signal in the non-transitory recording medium or transferring the program or the digital signal via the network or the like, the program or the digital signal may be executed in another independent computer system.

Furthermore, the above-described embodiments may be combined.

Although the present invention has been described and illustrated in detail, it is clearly understood that the same is by way of example only and is not to be taken by way of limitation, the scope of the present invention being limited only by the terms of the appended claims.

**Industrial Applicability**

The present invention is, as a projector, applicable to on-board head-up displays in automobiles, for example.

**Reference Signs List**

| | |
|---|---|
| 10 | Projector |
| 101R | Red light source unit |
| 101G | Green light source unit |
| 101B | Blue light source unit |
| 102 | Mixer unit |
| 103 | Beam splitter |
| 104 | OEIC |
| 105 | Lens |
| 106 | Mirror |
| 107 | Control unit |
| 108 | Projection surface |
| 111 | Coefficient calculation unit |
| 112 | Initial coefficient storage unit |
| 113 | Compensation unit |

**EP 2 852 160 A1**

| 120, 120R, 120G, 120B, 121, 122 | Laser light |
| 130 | Projection unit |

## Claims

1. A projector comprising:

   a plurality of light source units configured to output laser light having wavelengths of different colors;
   a projection unit configured to scan the laser light output by the plurality of light source units over a projection surface to project an image onto the projection surface;
   a detection unit configured to detect a portion of amounts of the laser light output by the plurality of light source units for projecting the image; and
   a control unit configured to control the amounts of the laser light output by the plurality of light source units, based on color pixel values of each of pixels of the image, the color pixel values corresponding to the different colors,
   wherein the control unit is further configured to compensate for the amounts of the laser light, based on the portion of the amounts of the laser light detected by the detection unit, so that for each of the different colors, proportion of the amount of the laser light of the color output by one of the light source units to the color pixel value of the color in each of the pixels of the image which is projected onto the projection surface corresponds to predetermined proportion.

2. The projector according to Claim 1,
   wherein the control unit includes:

   a coefficient calculation unit configured to, using a first coefficient, calculate a second coefficient for each of the different colors, from the color pixel value of the color in each of the pixels of the image which is projected onto the projection surface and a portion of the amount of the laser light of the color detected by the detection unit when the laser light of the color is projected onto the pixel, the first coefficient indicating predetermined proportion of the amount of laser light of the color output by one of the light source units to the portion of the amount of laser light of the color which is output by the light source unit and detected by the detection unit, the second coefficient indicating proportion, to the color pixel value of the color, of the amount of the laser light of the color output by the light source unit based on the color pixel value; and
   a compensation unit configured to compensate for the amounts of the laser light output from the plurality of light source units so that the second coefficient calculated by the coefficient calculation unit for each of the different colors corresponds to a third coefficient indicating predetermined proportion of the amount of the laser light of the color output by one of the light source units to the color pixel value of the color.

3. The projector according to Claim 2,
   wherein the coefficient calculation unit is configured to randomly select the pixels in the image.

4. The projector according to Claim 2,
   wherein the coefficient calculation unit is configured to select, for each of the different colors, a pixel which has a maximum color pixel value of the color, as one of the pixels in the image.

5. The projector according to Claim 2,
   wherein the coefficient calculation unit is configured to select, as the pixels in the image, a pixel that has a largest sum of the color pixel values of the different colors, and, from among pixels each having the color pixel values of 0 or greater, a pixel that has a smallest sum of the color pixel values and a pixel that has a medium sum of the color pixel values.

6. The projector according to any of Claims 2 to 5,
   wherein the coefficient calculation unit is configured to calculate the second coefficient, when the color pixel values of each of the pixels are greater than 0.

7. The projector according to any of Claims 1 to 6,
   wherein the projection unit includes:

a mixer unit configured to mix the laser light output from the plurality of light source units to output mixed light;

a beam splitter which divides the mixed light into two beams; and

a mirror which causes one of the two beams obtained by the beam splitter to be scanned onto the projection surface, and

the detection unit is configured to detect an amount of light of the other of the two beams obtained by the beam splitter as the portion of the amounts of the laser light output by the plurality of light source units.

8. A method for compensating for amounts of laser light having wavelengths of different colors to be scanned by a projector including a plurality of light source units which output the laser light; the method comprising:

(a) scanning the laser light output by the plurality of light source units over a projection surface to project an image onto the projection surface;

(b) detecting a portion of amounts of the laser light output by the plurality of light source units for projecting the image; and

(c) controlling the amounts of the laser light output by the plurality of light source units, based on color pixel values of each of pixels of the image, the color pixel values corresponding to the different colors,

wherein in step (c), the amounts of the laser light are compensated for, based on the portion of the amounts of the laser light detected in step (b), so that for each of the different colors, proportion of the amount of the laser light of the color output by one of the light source units to the color pixel value of the color in each of the pixels of the image which is projected onto the projection surface corresponds to predetermined proportion.

FIG. 1

## FIG. 2

```
        ┌─────────────┐
        │    Start     │
        └─────────────┘
               │                    S1
        ┌──────▼──────┐
        │    n = 1     │
        └─────────────┘
               │                    S2
        ┌──────▼───────────┐
        │ Randomly select a pixel │
        └──────────────────┘
               │                    S3
        ┌──────▼──────┐
        │ Obtain OEIC output │
        └─────────────┘
               │                    S4
        ┌──────▼──────┐
        │ Obtain pixel value │
        └─────────────┘
               │                    S5
            ◇─────────◇
           ╱ Any of color ╲      YES
          ◇  pixel values  ◇──────────┐
           ╲    is 0?     ╱           │
            ◇─────────◇               │
               │ NO              S6    │
        ┌──────▼──────┐                │
        │   n = n+1    │                │
        └─────────────┘                │
               │               S7       │
         NO  ◇─────────◇               │
        ┌────╱  n = 4?  ╲              │
        │    ◇─────────◇               │
        │       │ YES           S8      │
        │ ┌─────▼──────┐                │
        │ │ Calculate coefficients │    │
        │ │   Rt, Gt, and Bt  │         │
        │ └────────────┘                │
        │      │ S9           S10       │
        │ ┌────▼─────┐  ┌──────────────▼──┐
        │ │ Compensate for │ │ Compensate in same │
        │ │  laser light  │ │ manner as previous frame │
        │ └──────────┘  └─────────────────┘
        │      │              │
        │      └──────┬───────┘
        │      ┌──────▼──────┐
        │      │    End       │
        │      └─────────────┘
```

FIG. 3

Start

S11
Select pixel that has
maximum red pixel value

S12
Obtain OEIC output

S13
Obtain pixel value

S14
Any of color
pixel values
is 0? — YES

NO

S15
Select pixel that has
maximum green pixel value

S16
Obtain OEIC output

S17
Obtain pixel value

S18
Any of color
pixel values
is 0? — YES

NO

S19
Select pixel that has
maximum blue pixel value

S20
Obtain OEIC output

S21
Obtain pixel value

S22
Any of color
pixel values
is 0? — YES

NO

S8
Calculate coefficients
Rt, Gt, and Bt

S9
Compensate for laser light

S10
Compensate in same
manner as previous frame

End    3/4

FIG. 4

```
            ┌─────────────┐
            │    Start     │
            └─────────────┘
                   │
                   ▼                           S31
   ┌─────────────────────────────────┐
   │ Select pixel which has maximum  │
   │    sum of color pixel values    │
   └─────────────────────────────────┘
                   │                           S32
                   ▼
   ┌─────────────────────────────────┐
   │        Obtain OEIC output        │
   └─────────────────────────────────┘
                   │                           S33
                   ▼
   ┌─────────────────────────────────┐
   │        Obtain pixel value        │
   └─────────────────────────────────┘
                   │                           S34
                   ▼
   ┌─────────────────────────────────┐
   │ Select pixel which has minimum  │
   │    sum of color pixel values    │
   └─────────────────────────────────┘
                   │                           S35
                   ▼
   ┌─────────────────────────────────┐
   │        Obtain OEIC output        │
   └─────────────────────────────────┘
                   │                           S36
                   ▼
   ┌─────────────────────────────────┐
   │        Obtain pixel value        │
   └─────────────────────────────────┘
                   │                           S37
                   ▼
   ┌─────────────────────────────────┐
   │  Select pixel which has medium  │
   │    sum of color pixel values    │
   └─────────────────────────────────┘
                   │                           S38
                   ▼
   ┌─────────────────────────────────┐
   │        Obtain OEIC output        │
   └─────────────────────────────────┘
                   │                           S39
                   ▼
   ┌─────────────────────────────────┐
   │        Obtain pixel value        │
   └─────────────────────────────────┘
                   │                           S8
                   ▼
   ┌─────────────────────────────────┐
   │     Calculate coefficients       │
   │        Rt, Gt, and Bt            │
   └─────────────────────────────────┘
                   │                           S9
                   ▼
   ┌─────────────────────────────────┐
   │     Compensate for laser light   │
   └─────────────────────────────────┘
                   │
                   ▼
            ┌─────────────┐
            │     End      │
            └─────────────┘
```

Europäisches
Patentamt

European
Patent Office

Office européen
des brevets

# EUROPEAN SEARCH REPORT

Application Number

EP 14 18 3834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/302515 A1 (PLUT WILLIAM J [US]) 2 December 2010 (2010-12-02) * the whole document * | 1-3,7,8 | INV. H04N9/31 |
| A | US 2009/161707 A1 (CHAMPION MARK [US] ET AL) 25 June 2009 (2009-06-25) * the whole document * | 1-8 | |
| A | US 2010/328609 A1 (SILVERSTEIN BARRY D [US] ET AL) 30 December 2010 (2010-12-30) * the whole document * | 1-8 | |

**TECHNICAL FIELDS SEARCHED (IPC)**

H04N

The present search report has been drawn up for all claims

| Place of search | Date of completion of the search | Examiner |
|---|---|---|
| Munich | 30 January 2015 | Doswald, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 3834

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2015

| Patent document cited in search report | | Publication date | Patent family member(s) | | Publication date |
|---|---|---|---|---|---|
| US 2010302515 | A1 | 02-12-2010 | CN | 102450021 A | 09-05-2012 |
| | | | EP | 2436188 A1 | 04-04-2012 |
| | | | JP | 2012527655 A | 08-11-2012 |
| | | | KR | 20120026109 A | 16-03-2012 |
| | | | US | 2010302515 A1 | 02-12-2010 |
| | | | US | 2014028986 A1 | 30-01-2014 |
| | | | WO | 2010138240 A1 | 02-12-2010 |
| US 2009161707 | A1 | 25-06-2009 | CN | 101897090 A | 24-11-2010 |
| | | | EP | 2223398 A2 | 01-09-2010 |
| | | | JP | 2011508427 A | 10-03-2011 |
| | | | US | 2009161707 A1 | 25-06-2009 |
| | | | WO | 2009085397 A2 | 09-07-2009 |
| US 2010328609 | A1 | 30-12-2010 | US | 2010328609 A1 | 30-12-2010 |
| | | | WO | 2010151313 A1 | 29-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009141107 A